# EUROPEAN PATENT APPLICATION

(11) **EP 0 935 193 A2**
(43) Date of publication of application: **11.08.1999**
(21) Application number: 99300725.1
(22) Date of filing: 01.02.1999
(51) Int. Cl.: G06F 9/46, G06F 9/44

(54) **World wide web agent**

(30) Priority: 06.02.1998 US 19735
(71) Applicant: Hewlett-Packard Company, Palo Alto, California 94304 (US)
(72) Inventor: Mellquist, Peter E., Auburn, CA 95603 (US); Pascual, Luis A., Jr., Antelope, CA 95843 (US)
(74) Representative: Jehan, Robert

(57) **Abstract**

A WebAgent (300) includes a Web server process (302) integrated with Web content (304). A Web mini-client process (306) is integrated with the Web server process (302) and the Web content (304) of the Web Agent. The integrated Web server and Web mini-client are operable to enable the Web server process (302) to transfer a Web request to a peer Web server (e.g., 312) in another appliance (e.g., 310) by transmitting the request (309) through its associated mini-client (306). The Web content (304) is compressed (512) and the Web server process decompresses (412) the Web content as it is retrieved and returned to a requesting Web client process. Tools (200..210) simplify the process for engineers designing such integrated, embedded WebAgents. The Web content (compressed) is converted to a text encoded (e.g., hexadecimal) representation compatible with the computer source programming language of the Web server and mini-client processes (202. 204, 504, 512..520). The Web content, so converted, is then compiled and linked (506) with the server and mini-client processes in a simple build operation.

## Description

The invention relates to a Web Agent for Web client and server processes and for constructing such clients and servers embedded within networked appliances substantially devoid of mass storage capabilities.

The World Wide Web on the Internet has become a widely adopted, de facto standard for dissemination of information to computer users worldwide. In view of this popularity, Web related tools and interfaces have also become popular for dissemination of information within smaller entities, such as within a corporate enterprise, so-called intranet network communications. World Wide Web (also referred to herein as WWW or simply Web) standards include a client/server model of processing and various related protocols and languages.

In particular, a Web client program (often referred to as a Web browser when applied to user interaction with the Web) generates requests in response to input information (i.e., from an interactive user of the Web client program). The requests are transmitted to a Web server process for processing of the request and return of resultant data to the Web client. The information returned is often formatted in a language defined by the Web standards and often referred to as Hypertext Markup Language (or HTML). Those skilled in the art will recognize that Web client/server processes may exchange various forms of information. HTML is merely one common example of the format of information exchanged between Web servers and clients. The HTML formatted information can identify particular tokens or symbols which refer to other related information. Such tokens are often referred to as links (or hyperlinks or hypertext links) in that an interactive user with a Web client process may select (click) on the link to generate the next request from the Web server. An interactive user is said to navigate the Web by using navigation features which control the Web client to "navigate" forward or backward along a chain of links requested by a user. Further, those skilled in the art will recognize that HTML information may contain a variety of content in addition to hyperlinks as noted above. The HTML information may include, for example, digitized images, sound recordings, and text as well as other types of control structures in addition to hyperlinks.

The client/server model of process cooperation and communication between the Web server process and a Web client process permits the processes to be resident anywhere in a network of computing devices. The client/server model permits enough flexibility that the client and server processes may be co-resident on a single computing device or may be distributed among distinct computing devices in the network.

Each unit (or page) of information accessible in the Web is identified by a universal resource identifier (URI). The URI identifies a particular resource as stored somewhere within the server node (appliance) that is servicing the request. A prefix portion is added to the front of the URI to identify the server appliance in the network of computing appliances. The prefix is essentially an address specification which identifies a particular server process somewhere in the network of computing appliances. The address prefix portion and the appended URI is referred to as a universal resource locator (URL). The URL serves as an address to locate the requested page and to request retrieval of it from the Web server process. In well known Web user interactive techniques, the Web client (browser) generates a request for retrieval of a particular page identified by its URL. The Web server receives the request and locates the identified page for retrieval. It is common that the requested information (identified by the URL) is stored on mass storage devices (i.e., hard disk file systems) associated with the computing node executing the Web server process (or at a minimum accessible to that computing node). The Web server retrieves the requested page from the mass storage device and returns it to the requesting client process.

It has now become more commonplace for the client/server model and associated standards to be applied to communication of network management information through an enterprise network (i.e., a corporate "intranet"). For example, network communication management appliances such as networking routers or bridges which manage network data traffic on the enterprise network may be centrally managed and configured via exchange of management data over the enterprise network. A network manager, from a computing system on the enterprise network (or possibly remote from the network), requests status or configuration information from a network appliance and transmits updates to such status and configuration data to the network appliance. Typically in such environments, the network manager uses a client process at a computing node which communicates with a server process operable within the network appliance. Numerous other examples of such network management using client/server models will be apparent to those skilled in the art.

In particular, use of a Web client/server model for such network management tasks has become popular. The network manager uses a Web client process (e.g., a Web browser) to communicate with a Web server process embedded with a network management appliances (e.g., a router, bridge, or printer).

In such embedded applications of Web server processes it is common that there is no mass storage device (i.e., hard disk file system) for local storage of the information pages potentially of interest to Web client (browser) processes. In such embedded applications, the Web pages (Web content) is usually stored in semiconductor memory within the embedded appliance (e.g., ROM or RAM devices within a network communication appliance).

This embedded Web content is tightly coupled to the Web server process operable within the network appliance (often operable within the same RAM or ROM memory devices). The Web server process must therefore translate the URL provided by a Web client process into an internal representation of the Web content stored within the network appliance memory. One solution to such a problem is the use of RAMdisk techniques to simulate a mass storage device within the memory of the server appliance (i.e., the network appliance having a Web server embedded therein). However, such solutions impose significant overhead and therefore costs on the server appliance. Program instructions and associated data structure to manage a full RAMdisk file system can be quite large and complex relative to size, cost, and complexity constraints associated with the server appliance.

Further, the generation of the embedded Web server and associated content is a cumbersome process. Present techniques require design engineers to produce the Web server process program instructions and the Web content as separate and distinct tasks. The Web server is typically constructed by compiling a source code program to generate a run-time binary executable module. However, present techniques typically require the engineer to construct the Web content by means other than program compilation. Presently, designers may need to generate binary data representing the Web content and carefully link the Web server with predetermined binary address and length values in order to locate the Web content in the embedded appliance's memory. Such multi-step processes, often including substantial manual processing, are both cumbersome and error prone.

It is therefore a problem to generate an embedded Web server appliance (one typically devoid of mass storage capacity) which incorporates required Web server process code and Web content in a manner which is simple and which reduces complexity within the Web server appliance as compared to present solutions.

The present invention seeks to provide a web agent.

According to an aspect of the present invention there is provided an embedded web agent as specified in claim 1.

According to another aspect of the present invention there is provided a method of constructing a web agent as specified in claim 6.

The preferred embodiments can solve the above and other problems, by providing methods and associated structures for constructing and using a Web server process and associated Web content both embedded within a distributed computing appliance. The preferred embodiments include tools to compress the Web content information (also referred to herein as HTTP content and Web pages) and to integrate the compressed Web content with associated Web server process code. Simple data structures can be used by the Web server process to locate desired Web content as compared to complex RAMdisk file systems taught by prior techniques.

Further features of the preferred embodiment provide a simplified Web client process (also referred to herein as a Web mini-client) integrated with the embedded Web server to allow programmatic access between such network appliances. An embedded Web client integrated with the embedded Web server permits the embodying appliance to exchange data with peer appliances using well defined Hypertext Transfer Protocol (HTTP) between the embedded mini-client of one appliance and the embedded Web server of another appliance. Further, the embedded Web server may pass a request on to another embedded Web server in another peer appliance by co-operating with the embedded mini-client to transmit the request to another server.

Collectively, the above features of the preferred embodiments, namely the embedded Web client and server processes as integrated with Web content, are referred to herein as a WebAgent. Tools for enabling simpler generation of the embedded WebAgent may be provided. These tools compress the Web content and transform it into a format useful for compiling with the source language code implementing the Web client and server processes. The building of a WebAgent is thereby simplified in that tools automatically transform Web content (e.g., compressed Web content) into C-language (or other appropriate programming language) source code such that the Web content, the Web server and the mini-client may all be compiled and linked as a single unit.

An embodiment of the present invention is described below, by way of example only, with reference to the accompanying drawings, in which:
Figure 1A is a block diagram of a generic Web server node as presently known in the art;
Figure 1B is a block diagram of an embodiment of embedded Web server node (a WebAgent) having associated embedded Web content;
Figure 2 is a diagram describing the flow of data for construction of an embodiment of WebAgent;
Figure 3 is a block diagram of two WebAgents each having embedded Web server processes, associated embedded Web content, and as associated Web mini-client processes to provide peer to peer communication therebetween;
Figure 4 is a flow chart describing the operation of methods operable within an embedded Web server process of a WebAgent as shown in Figure 3;
Figure 5 is a flowchart describing operation of methods for building a WebAgent as in Figure 3 having embedded Web content and associated embedded Web server and client processes; and
Figure 6 is a flowchart describing operation of methods operable within an embedded Web client process (mini-client) of a WebAgent as shown in Figure 3.

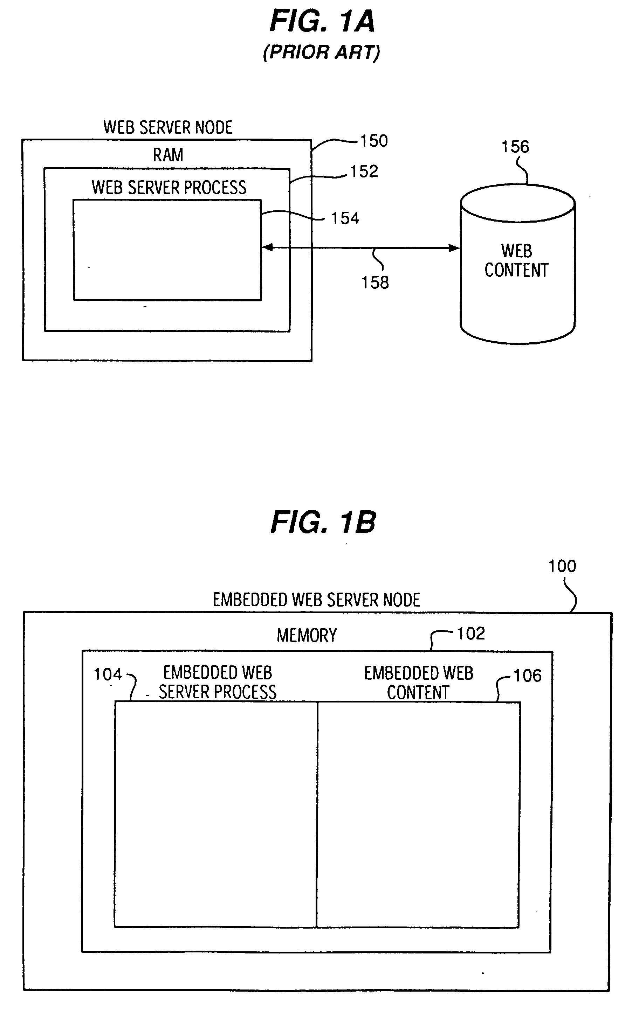

Figure 1A is a block diagram depicting a Web server node 150 as presently known in the art. A Web server process 154 is operable within the program memory 152 of Web server node 150. Web server process 154 in general locates and retrieves requested Web content from a local hard disk 156 via path 158. As presently known in the art, Web server process 154 retrieves Web content by manipulation of files stored in hard disk 156. As noted above, embedded systems often do not include a mass storage devices such as a local hard disk 156 due to cost, complexity, and power constraints related thereto.

Figure 1B is a block diagram of an embedded Web server node 100 (also referred to herein as a WebAgent) in accordance with the present invention. An embedded Web server process 104 along with embedded Web content 106 is present in a random access memory (RAM) or a read-only memory (ROM) 102 (referred to herein as simply memory 102) within the embedded Web server node 100. As shown in figure 1B, embedded Web server process 104 and embedded Web content 106 are in effect linked as a single module within memory 102 of embedded Web server node 100. Embedded Web server process 104 therefore retrieves embedded Web content 106 and by directly accessing an appropriate address in memory 102 containing the desired Web content within embedded Web content 106.

The embedded Web server is applicable to all embedded systems with network connectivity. In general, embedded Web server node 100 is typically a network communication appliance for use in a computing network. For example, embedded Web server node 100 may represent a network communication appliance such as a router, bridge, or printer. More generally, the embedded Web server 100 of the present invention may be applied to a variety of network appliances such as network printers, print servers, or other network peripheral appliances.

Such network communication appliances rarely contain the added cost or complexity associated with the use of a local hard disk for storage for Web content. More generally, embedded Web server node 100 represents any computing appliance wherein the Web server process and Web content are preferably embedded within a non-disk memory of the embedded Web server node 100. Though memory 102 in figure 1 is shown as a RAM device, those skilled in the art will readily recognize that the memory may be any of several equivalent electronic memory devices other than costly, complex hard disk subsystems. As shown in figure 1B, memory 102 is a memory in which the embedded Web server process is executed. Therefore, memory 102 of figure 1B is preferably a ROM or RAM device (or flash memory device) as commonly used for storing and fetching of program instructions by a processor device.

### WebAgent Construction Overview

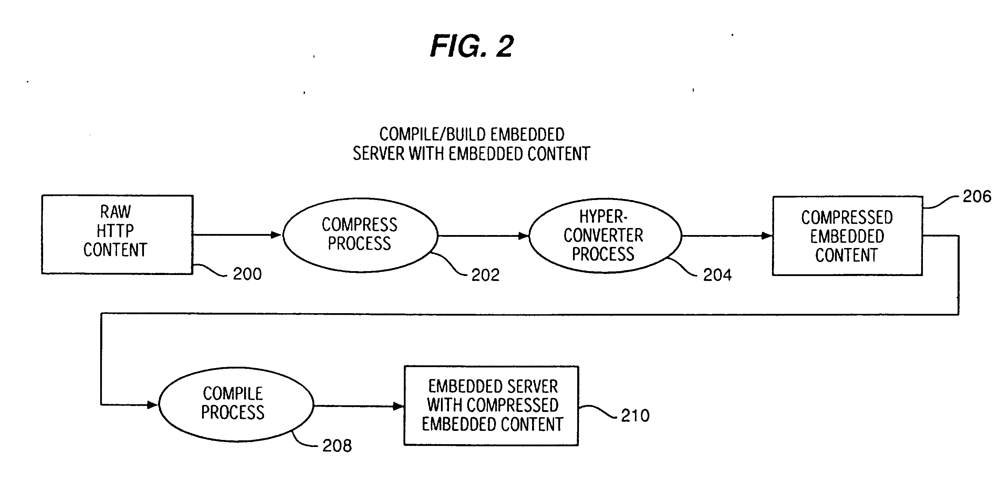

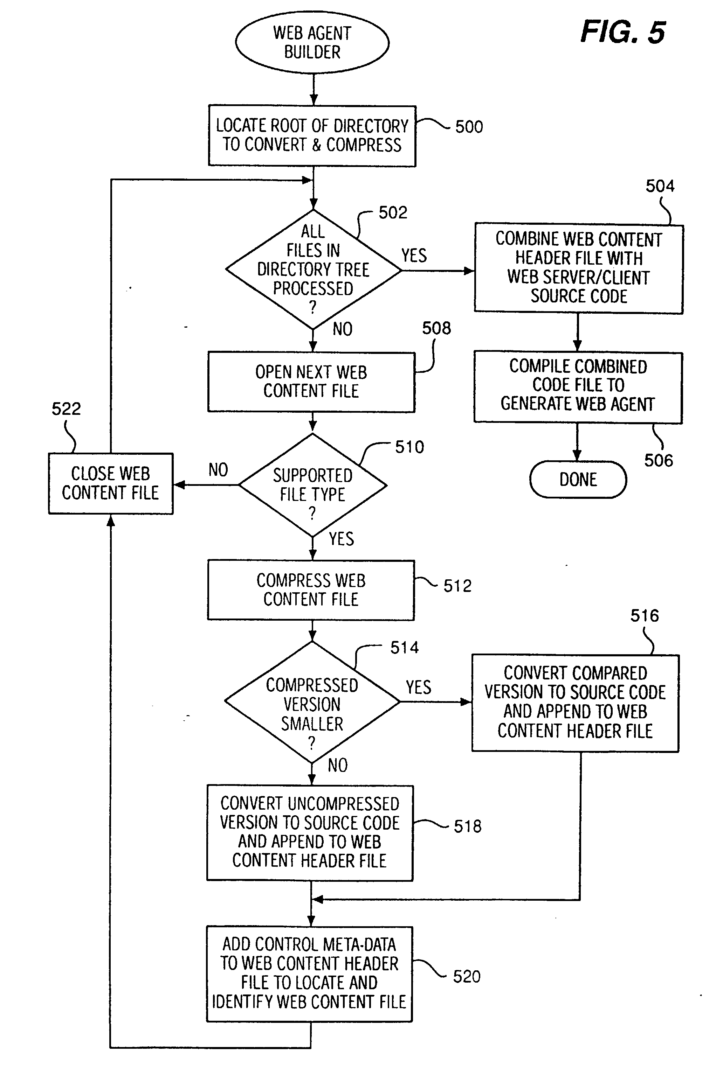

Figure 2 is a block diagram describing the general flow of data in the process of building the embedded Web server process linked with embedded Web content (a WebAgent). Element 200 represents HTTP data which is intended to be converted to the embedded Web content processed by the embedded Web server. As used herein "HTTP data" means any and all data types which are transmitted using the HTTP Web client/server protocols. This HTTP data is typically stored in a plurality of files in a local disk filesystem as presently known in the art and as depicted above and figure 1A. However, this HTTP data is applied to compression element 202 for data compression in accordance with well-known compression techniques. The compressed HTTP data generated by processing of element 202 is then applied to element 204 for conversion into an appropriate format for embedding with the embedded Web server process. The converted output generated by element 204 is represented by element 206 as compressed embedded Web content. In particular, the compressed embedded Web content 206 has been converted into a format compatible with the source code programming language used for the Web server process (and for the Web client process discussed herein below). Element 208 then receives this compressed embedded Web content 206 and compiles the source code file along with the Web server process source code files to generate the embedded Web server combined with the compressed embedded Web content 210. Additional details of this process are provided herein below with respect to figure 5.

As noted above, the preferred embodiment of the present invention integrates an embedded Web mini-client with the embedded Web server process and embedded Web content. The embedded Web client process is fully compliant with the HTTP standards defined for Web client/server interaction. However, the embedded Web client has no need for presentation of a user interface. Rather, the interface provided is a programmatic interface accessible to the associated embedded Web server process. In other words, the embedded Web server process, in response to a request from another client, may pass the request through the embedded Web client on to another Web server for further processing. Virtual URLs are thus achieved on the server process side rather than the typical client process side. A URL is "virtual" as implemented herein in that, unbeknownst to the requesting client process, the embedded Web server may pass the Web request on to another Web server process via the embedded Web mini-client. The original requesting Web client process is shielded from the need to precisely locate the requested URL on a particular embedded Web server.

The interface between the embedded Web server process and the associated embedded Web mini-client process is programmatic in that the embedded application in which the embedded Web server and client processes operate generally has no need for user interaction or graphical user interfacing.

### WebAgents

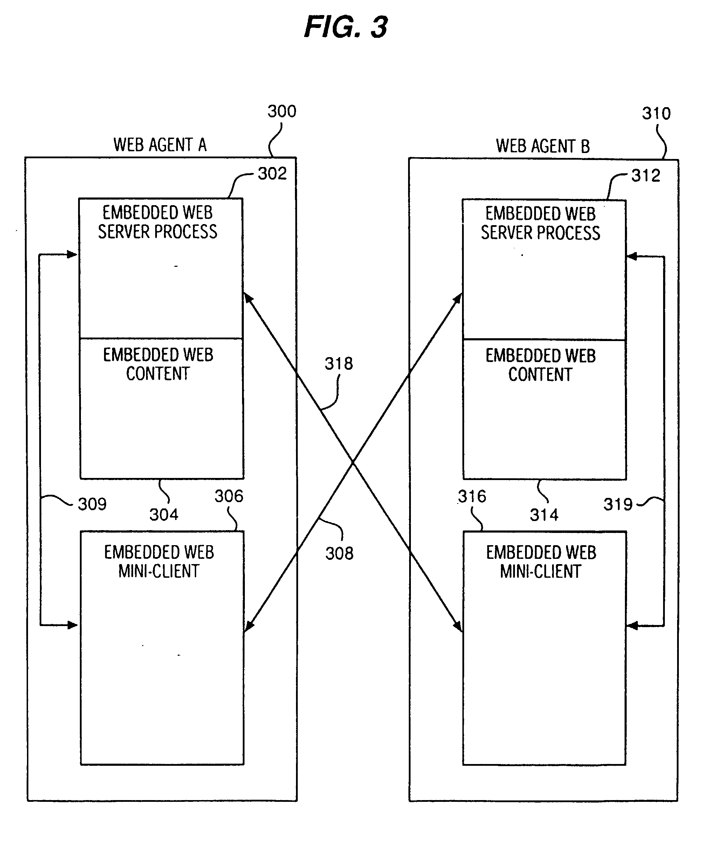

Figure 3 is a block diagram depicting two WebAgents communicating with one another. As used herein, a WebAgent is the combination of an embedded Web server process, associated embedded Web content, and optionally including an embedded Web mini-client. WebAgent A 300 includes embedded Web server process 302, embedded Web client 306 and embedded Web content 304. WebAgent B 310 includes embedded Web server process 312, embedded Web client 316, and embedded Web content 314.

Embedded Web server process 302 within WebAgent A 300 generally processes Web requests from any Web clients capable of communicating with WebAgent A 300. As noted above, embedded Web server process 302 is integrated with embedded Web content 304 preferably by compiling and linking the source language program into a single linked module. In like manner, embedded Web client 306 (mini-client) is integrated with embedded Web server process 302 and embedded Web content 304 to form a single linked program module. Similarly, embedded Web server process 312, embedded Web content 314, an embedded Web client 316 (mini-client) are integrated, compiled, and linked to form a single program module.

When embedded Web server process 302 receives a request for Web content which is not found within its associated embedded Web content 304, it may choose to pass the Web request to another Web server process (embedded or otherwise) in the network. The Web server process 302 does not in general implement the client role in the HTTP standards. To pass a Web request from the embedded Web server process 302 to another Web server requires a module acting in the role of a Web client requesting services of another Web server. Embedded Web client 306 therefore provides the client role of the HTTP standard necessary for passing a Web request from embedded Web server process 302 to another Web server process. In particular, embedded Web server process 302 transfers a Web request via programmatic interface 309 to embedded Web client 306. Embedded Web client 306, in turn, sends the request to another Web server process using HTTP standards. For example, as shown in figure 3, embedded Web client 306 may transfer via path 308 a Web request to embedded Web server process 312 within another WebAgent B 310. Embedded Web server process 312 then processes the transferred Web request in accordance with its standard HTTP server role and returns the requested data via path 308 to requesting embedded Web client 306. Embedded Web client 306, in turn, returns the requested Web content via programmatic interface 309 to embedded Web server process 302. Embedded Web server process 302, in turn, returns the requested data to the original requesting client process (not shown).

WebAgent B 310 similarly implements programmatic interface 319 connecting its embedded Web server process 312 with an associated embedded Web client 316. In like manner to that of Web client 306, embedded Web client 316 may transfer a Web request to another Web server process, for example, embedded Web server process 302 via path 318.

A WebAgent (300 or 310) as shown in figure 3 may therefore act in either a client or server role in accordance with the HTTP standards. This enables programmatic exchange of information between peer WebAgents operable within peer network communication appliances for programmatic exchange of information between an embedded WebAgent in a network communication appliance and any other HTTP compliant Web server process. Furthermore, such a programmatic information exchange interface allows the bypass of security mechanisms imposed by typical GUI hypertext interfaces (i.e., HTML hyperlinks).

The peer to peer WebAgent communication capability as depicted in figure 3 allows significant flexibility and power within the management of network communication appliances having embedded HTTP protocols. WebAgents in peer appliances may communicate with one another using HTTP standard client/server techniques without need for operator intervention. For example, network communication appliances may communicate with one another to balance or shift network traffic loads or to re-direct network traffic to or from certain preferred nodes, etc. Such network management previously required operator interaction to manage individual network communication appliances whereas peer to peer communication allows automated management and configuration of network communication appliances.

### Web Server Process

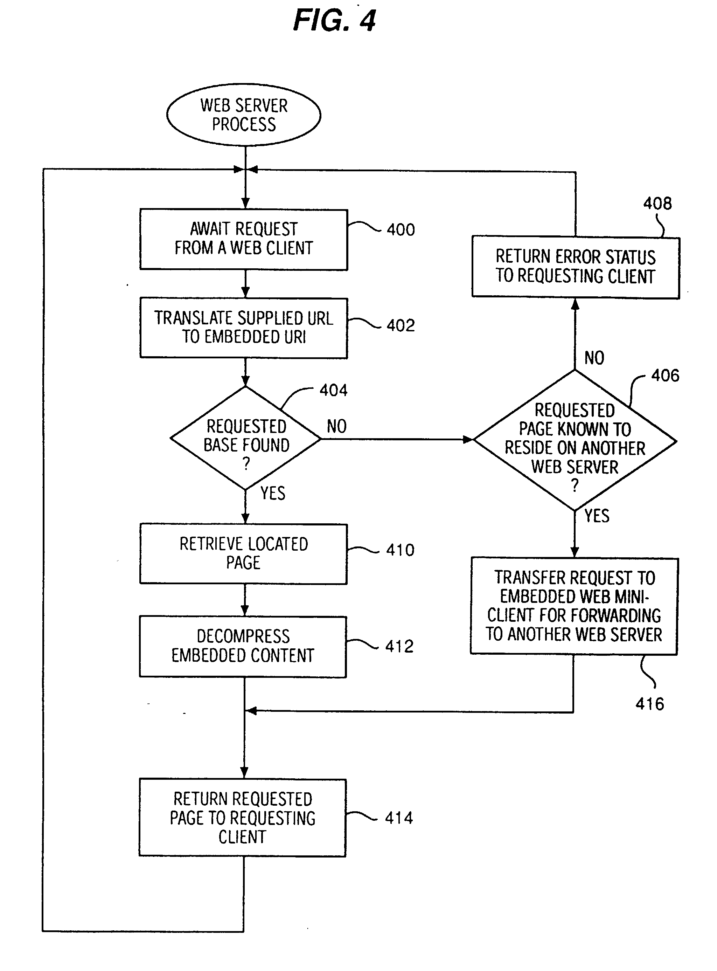

Figure 4 is a flow chart describing methods operable within an embedded Web server process (i.e., embedded Web server process 302 of figure 3). Element 400 is first operable to await receipt of a request from a Web client coupled to the Web server process. Upon receipt of such a Web request, element 402 is operable to translate the supplied universal resource locator (URL) supplied in the Web request into an embedded memory location for the requested Web content. The network address prefix portion is first stripped away from the URL supplied in the request. The remaining URI is then used in a table lookup procedure to translate the URI into an internal memory location at which the embedded Web content is stored. For example, the URI may be translated to a memory pointer or other data structure within the embedded Web content that identifies the location of a particular Web page and associates it with the URI originally defined by the raw Web content. In particular, the URI may identify a file path name in the original raw Web content. This original file path name is translated by a table lookup procedure within element 402 to locate the corresponding memory location within the embedded Web content.

Element 404 is then operable to determine if the requested Web page is found within the embedded Web content associated with the Web server process. If the requested Web page is so located, element 410 is next operable to retrieve the located Web page. Element 411 then determines whether the retrieved embedded Web content is compressed so as to require decompression prior to transmission. If so, element 412 is then operable to uncompress the Web content retrieved by operation of element 410. In either case, element 414 is next operable to return the uncompressed Web page retrieved and uncompressed by operation of elements 410 through 412. The uncompressed data is returned to the requesting Web client in accordance with HTTP standards.

Those skilled in the art will recognize that elements 410-414 may operate substantially in parallel to permit streaming of the retrieved uncompressed Web content back to the requesting Web client. In other words operations for retrieval (410), decompression (411, 412), and return of the data to the requesting Web client (414) may substantially overlap one another for processing a particular Web request. Such concurrent processing within Web server process is achieved by well-known programming techniques and improves the throughput of data being returned to the requesting Web client. Following completion of retrieval, decompression, and return of the requested Web page, processing continues by looping back to element 400 to await receipt of another request from a Web client.

If element 404 determines that the requested Web page is not located within the its associated embedded Web content, processing continues with element 406 to determine whether the requested Web page may be known to reside on another Web server and therefore accessed via a Web mini-client process (as discussed herein below). If not, processing continues with element 408 to return an error status indication to the requesting Web client indicating that the requested Web page is unavailable. Processing then continues by looping back to element 400 to await receipt of another Web request from a Web client.

If element 406 determines that the requested Web page may reside on another Web server, processing continues with element 416 to transfer the Web request to another Web server. In particular, element 416 uses the programmatic interface described above in figure 3 to transfer the Web request from the embedded Web server process to its associated embedded Web client process. The embedded Web client process, in turn, transfers is the Web request to another Web server process via HTTP standards. Data or status returned from the other Web server process is, in turn, retumed to the embedded Web server process via the above discussed programmatic interface. The Web server process then continues with element 414 to return the Web content retrieved via the mini-client interface to the original requesting client. Processing then continues by looping back to element 400 to await receipt of another Web request from a Web client.

### Web Server Process

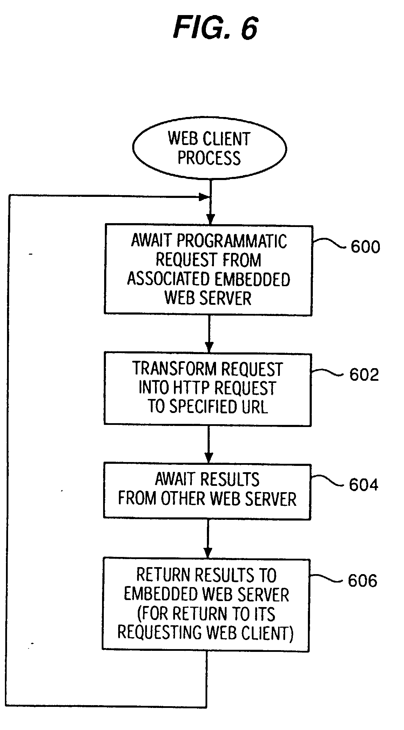

Figure 6 is a flow chart describing the operation of methods operable within an embedded in Web client process (also referred to herein is a mini-client). Element 600 is first operable to await receipt of a Web request transferred to the embedded Web client from its associated embedded Web server via the programmatic interface described herein above. In response to receipt of such a transferred Web request, element 602 is next operable to transform the request received via the above discussed programmatic interface into a format appropriate for transmission to another Web server process in accordance with the HTTP standards. Element 602 is further operable to transmit the transformed request to another Web server process in accordance with HTTP standards.

Element 604 is then operable to await receipt of results from the other Web server process to which the transferred Web request was transmitted. As is known in the art, the returned results may provide the requested data, or may indicate an error status resulting from processing within the other Web server process. Element 606 is then operable to return the received results to the embedded Web server process via the above identified programmatic interface. As noted above, with regard to element 416, the embedded Web server process, in turn, returns these results to the originating Web client process.

### WebAgent Build Process

Figure 5 is a flow chart describing methods operable to generate the WebAgent. The methods of figure 5 are generally operable outside the network communication appliance in which the embedded WebAgent will operate. In general, the methods of figure 5 are operable within an engineering workstation or personal computer used by a design engineer generating the WebAgent to be operable within the network communication appliance. In particular, the methods of figure 5 may be implemented by any of several well-known workstation or personal computer programming techniques including a custom program, command language script files, and combinations of these and other techniques.

Element 500 is first operable the locate a root or starting position for a filesystem directory containing the HTTP data to be converted to embedded Web content. In particular, an entire filesystem directory tree comprising multiple files of related Web content is converted into associated embedded Web content format by the method described herein in figure 5.

Element 502 is then operable to determine if all files in the directory tree to be converted have been processed. As described herein below, each file is processed by conversion and compression to generate a header file in the source language compatible with the embedded Web server/client process source code. When all files in the directory tree have been so processed, element 504 is next operable to combine the Web content header file so created as described herein below with the Web server source code file. As noted above, the WebAgent may also include source code for an embedded Web client process (mini-client). The source code files generated by operation element 504 is then compiled and linked as required by processing of element 506 to generate the executable WebAgent. Other steps, not shown but well-known to those skilled in the art, are then operable to physically imbed the generated WebAgent program module into the network communication appliance in which is intended to operate. Processing of the method of figure 5 is then completed.

If element 502 determines that further files remain in the directory tree for processing, element 508 is next operable to locate and open the next Web content file in the directory tree to be processed. Element 510 is then operable to determine whether the presently opened Web content file contains a type of data supported by the embedded WebAgent server process (e.g., HTTP data).

If element 510 determines that the presently open Web content file contains an unsupported type of data, element 522 is next operable to close the presently open Web content file. Processing then continues by looping back to element 502 to process remaining files in the directory tree.

If element 510 determines that the presently open Web content file contains a supported HTTP data type, element 512 is next operable to compress the data in the presently opened Web content file. Any of several well-known data compression techniques may be utilized so long as the embedded with server process is compatible for purposes of decompressing the compressed data. Element 514 is next operable to determine whether the compressed version of the Web content file is smaller than the uncompressed version thereof. As is known in the art, certain data compression techniques when applied to certain types of data sequences (such as previously compressed data as in a digitized image) may not achieve desired compression results and may in fact increase the size of the data. Element 514 is therefore operable to determine whether or the compressed version of the Web content file or the uncompressed version thereof is smaller in physical size.

If the compressed version of the file is determined to be smaller by operation of element 514, element 516 is next operable to convert the compressed version of the presently open Web content file into a source code header file compatible with the programming language for the source code of the Web server process and Web client process. In particular, the Web content is converted into a text encoded binary data structure (e.g., hexadecimal) as a header file or other source programming language file for defining the compressed Web data as an initialized array of data bytes. Processing then continues with element 520.

If element 514 determines that the uncompressed version of the presently open Web content file is equal in size or smaller than the compressed version thereof, element 518 is operable in like manner to that of element 516. Specifically, element 518 converts the uncompressed version of the presently open Web content file into a source code header file compatible with the source code programming language of the embedded Web server process and embedded Web client process. Those skilled in the art will readily recognize that elements 516 and 518 are identical operations simply performed on different supplied input; namely as applied to the compressed Web content by element 516 or the uncompressed Web content by element 518. In both cases, processing then continues with element 520.

Element 520 is next operable to add control meta-data structures in to the header file being generated. These meta-data structures serve to locate and identify the compressed and converted Web content within the WebAgent executable file. In particular, location and length of the initialized data array containing the compressed and converted Web content is correlated with a corresponding URI associated with the original Web content file. This meta-data structure permits the Web server process of a WebAgent to locate the embedded Web content corresponding to the requested URL. As noted herein below, the preferred embodiment of the present invention dynamically constructs the requisite meta-data structures (e.g., linked lists and/or table structures for locating a URI in the WebAgent memory) at run-time initialization of the WebAgent.

The following C-language data structure is exemplary of a meta-data structure which may be generated in association with each file processed to correlate the embedded Web content with the original URL of the raw content.

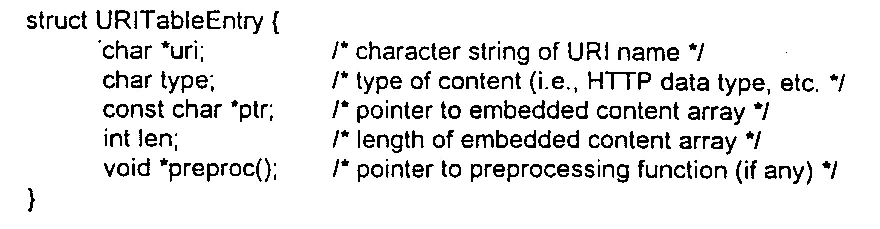

Processing then continues with element 522 to close the presently open Web content file. Processing then loops back to element 502 to continue processing further files in the directory tree selected. Elements 502, 508..522 are therefore operable iteratively to process each Web content file in the selected directory tree and to accumulate the compressed and converted embedded Web content into a Web content header file in a source code language compatible with that of the embedded Web server and embedded Web client processes.

As noted above, when element 502 eventually determines that all Web content files in the selected directory tree have been processed, elements 504 and 506 are next operable to combine the accumulated Web content header file with associated Web server and Web client source code files and to compile and link as required the combined source code files to generate a WebAgent executable file.

Other steps (not shown) well-known to those skilled in the art are then operable to physically imbed the WebAgent executable code within the desired network communication appliance.

The following UNIX shell script is exemplary of a script useful in a UNIX computing environment to construct a WebAgent including an embedded Web server process, associated embedded Web content, and, optionally, an associated embedded Web client process (a mini-client). Those skilled in the art will recognize severa variants of the following script useful in other computing environments (i.e., other UNI) versions, DOS, Windows, etc.) and embodied in other forms (i.e., as a sequence of program instructions rather than as an interpreted script language). The following script is therefore intended only as exemplary of the one such approach to construction of an embedded WebAgent.

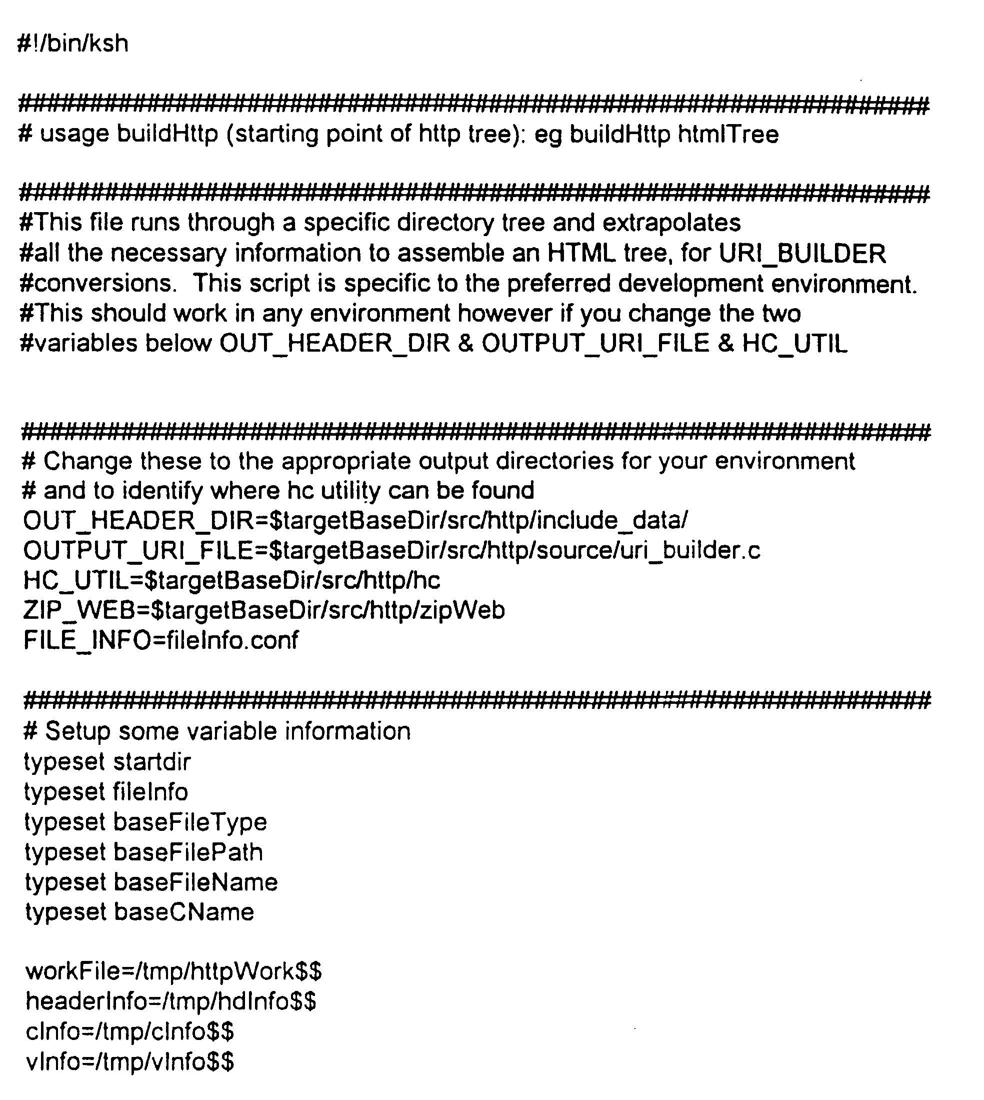

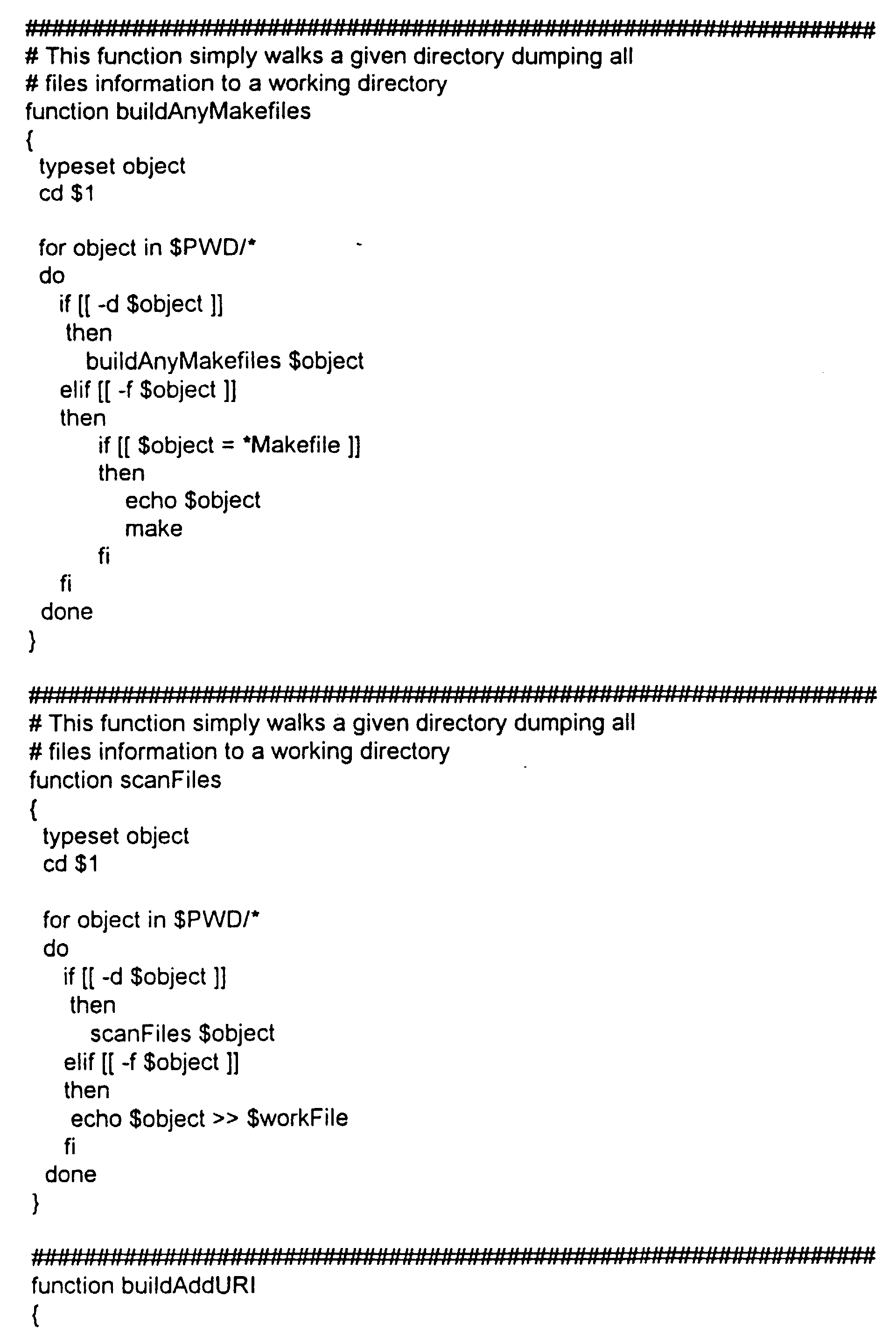

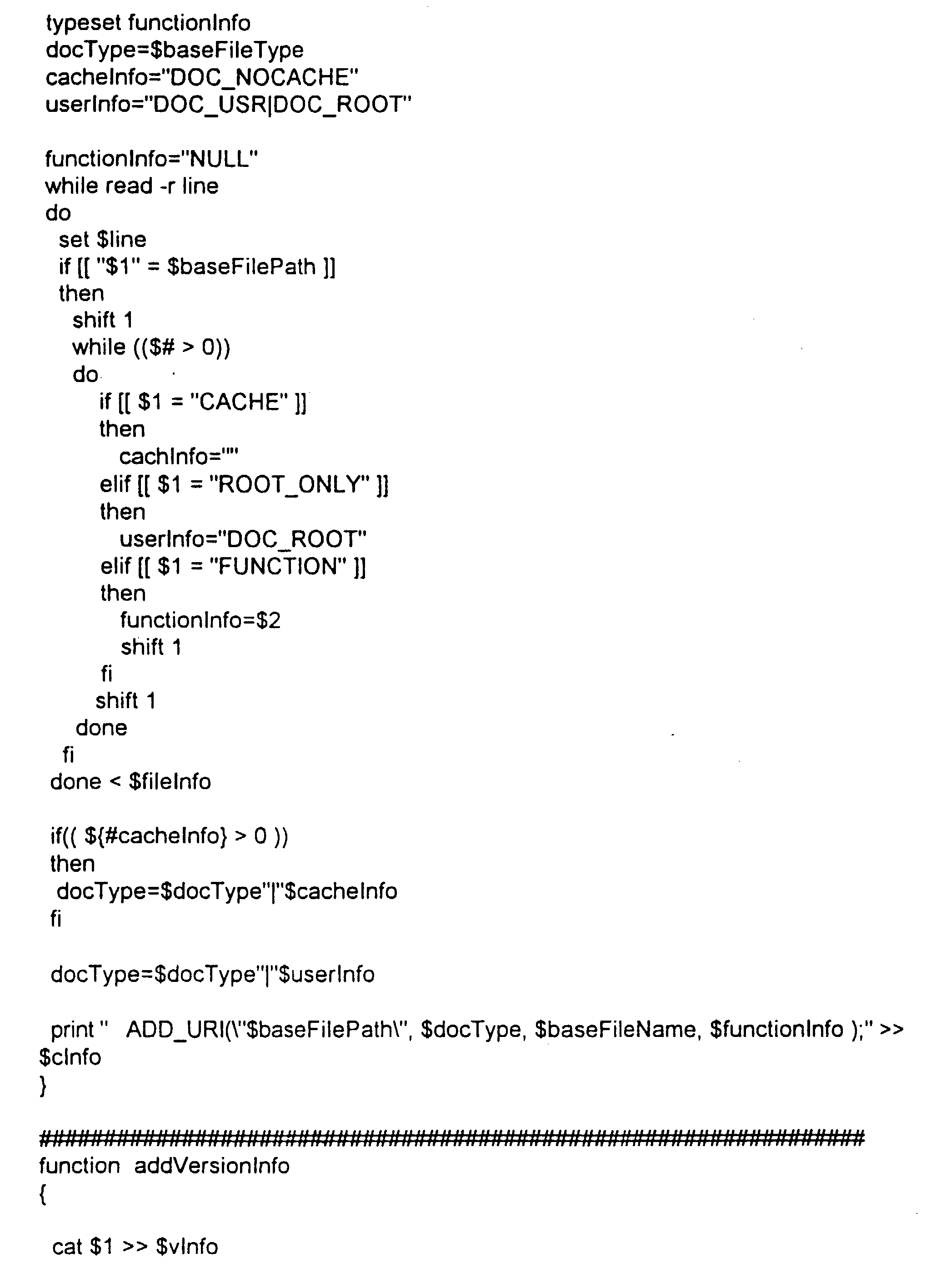

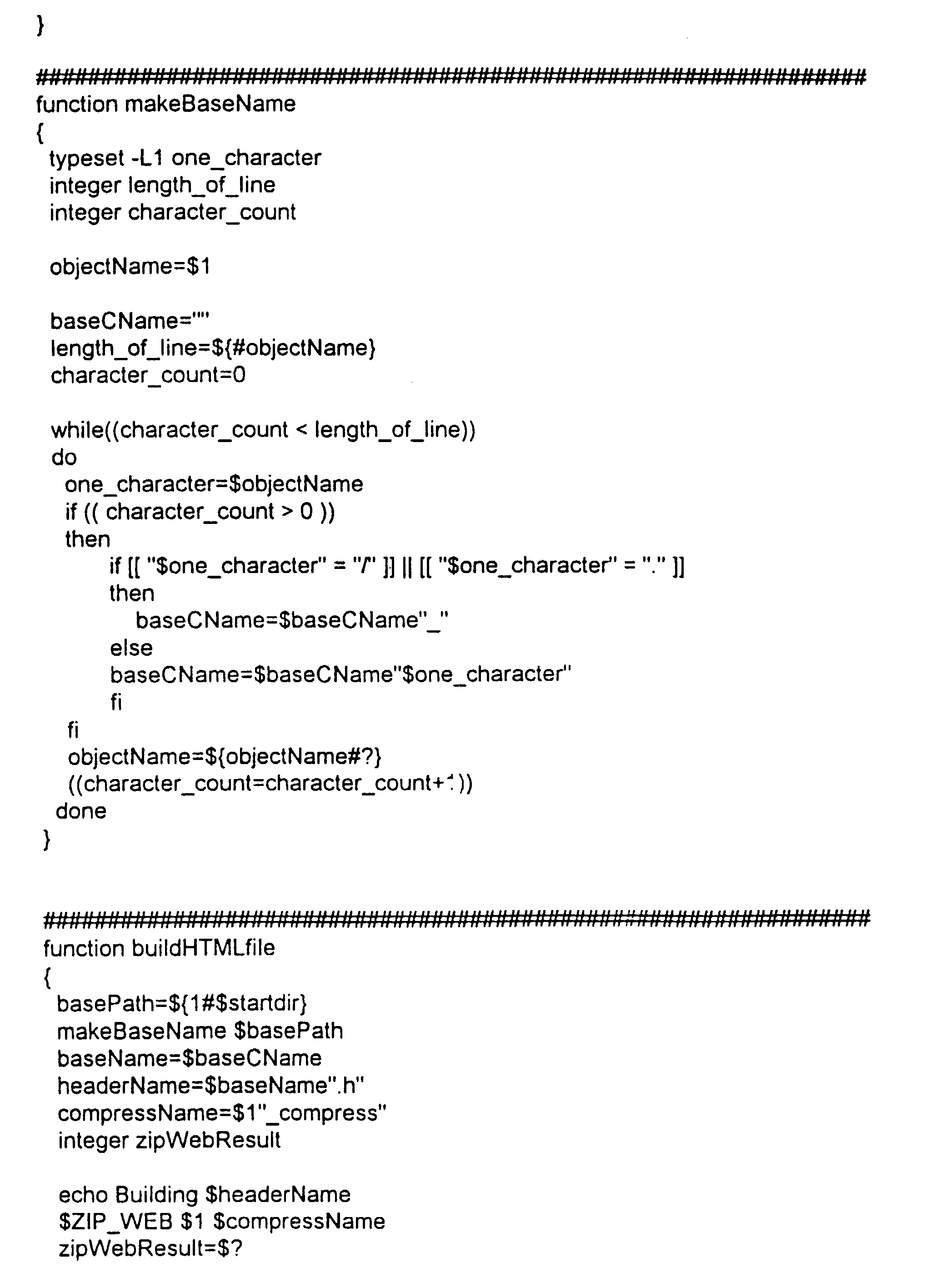

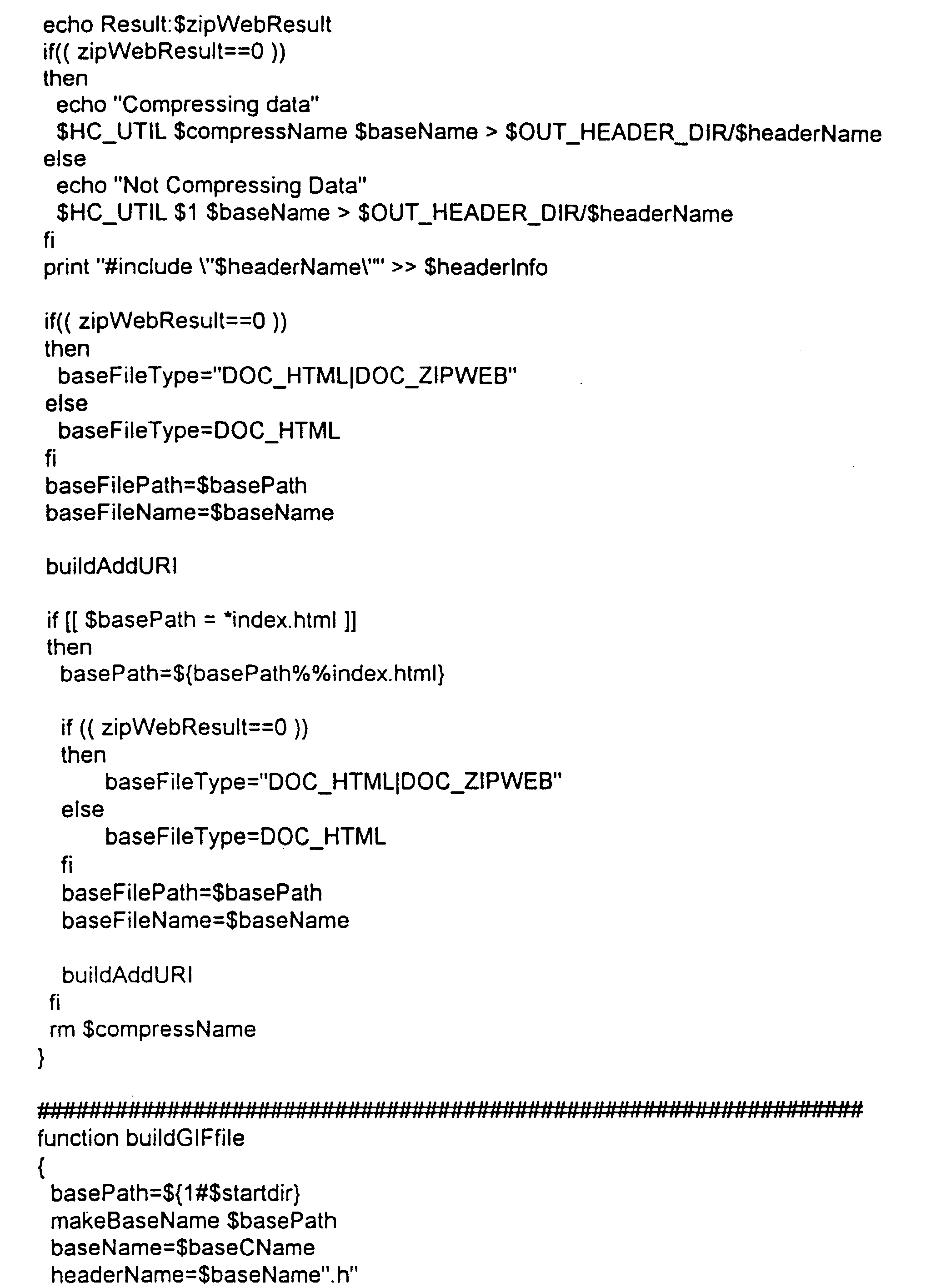

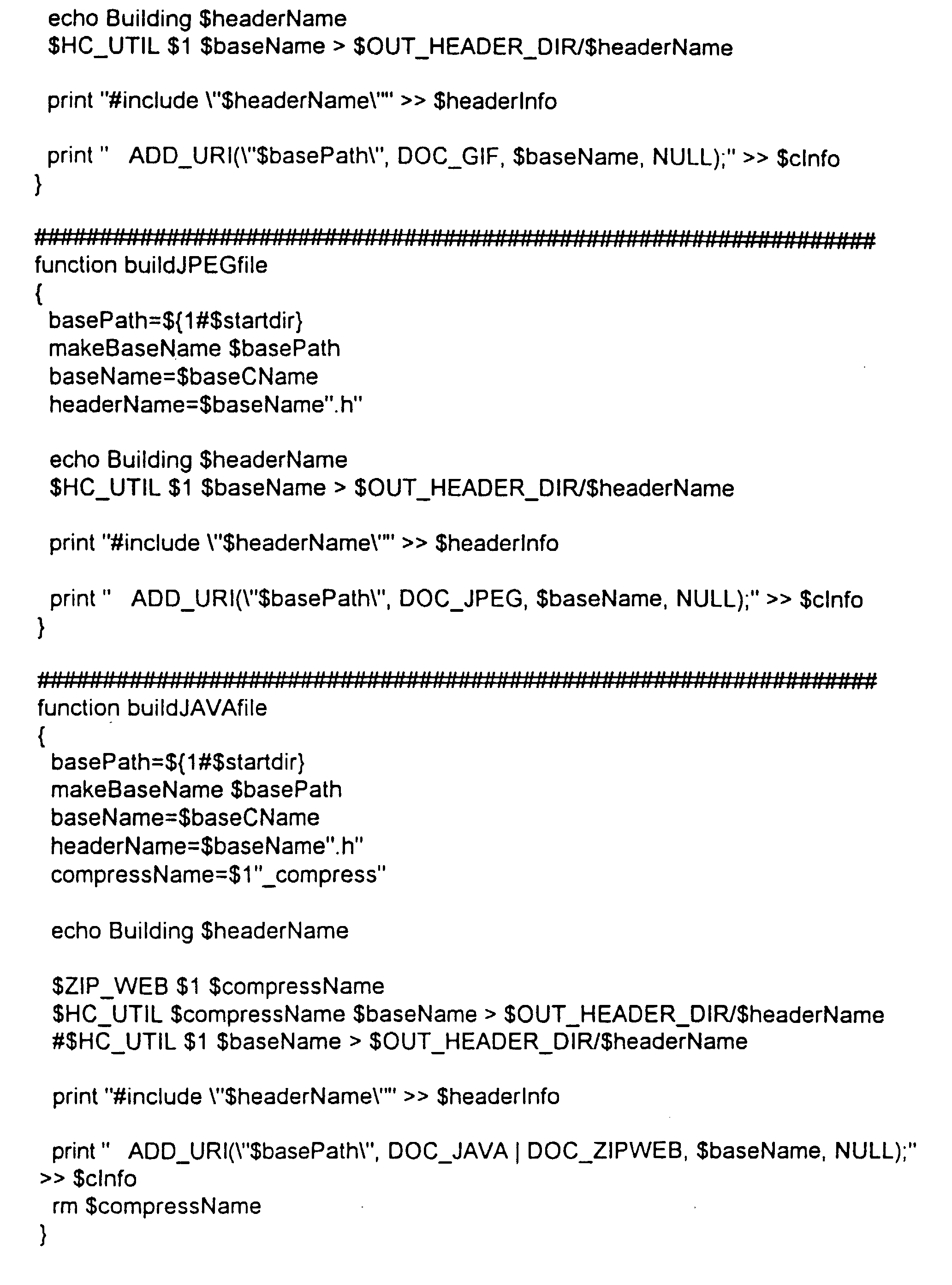

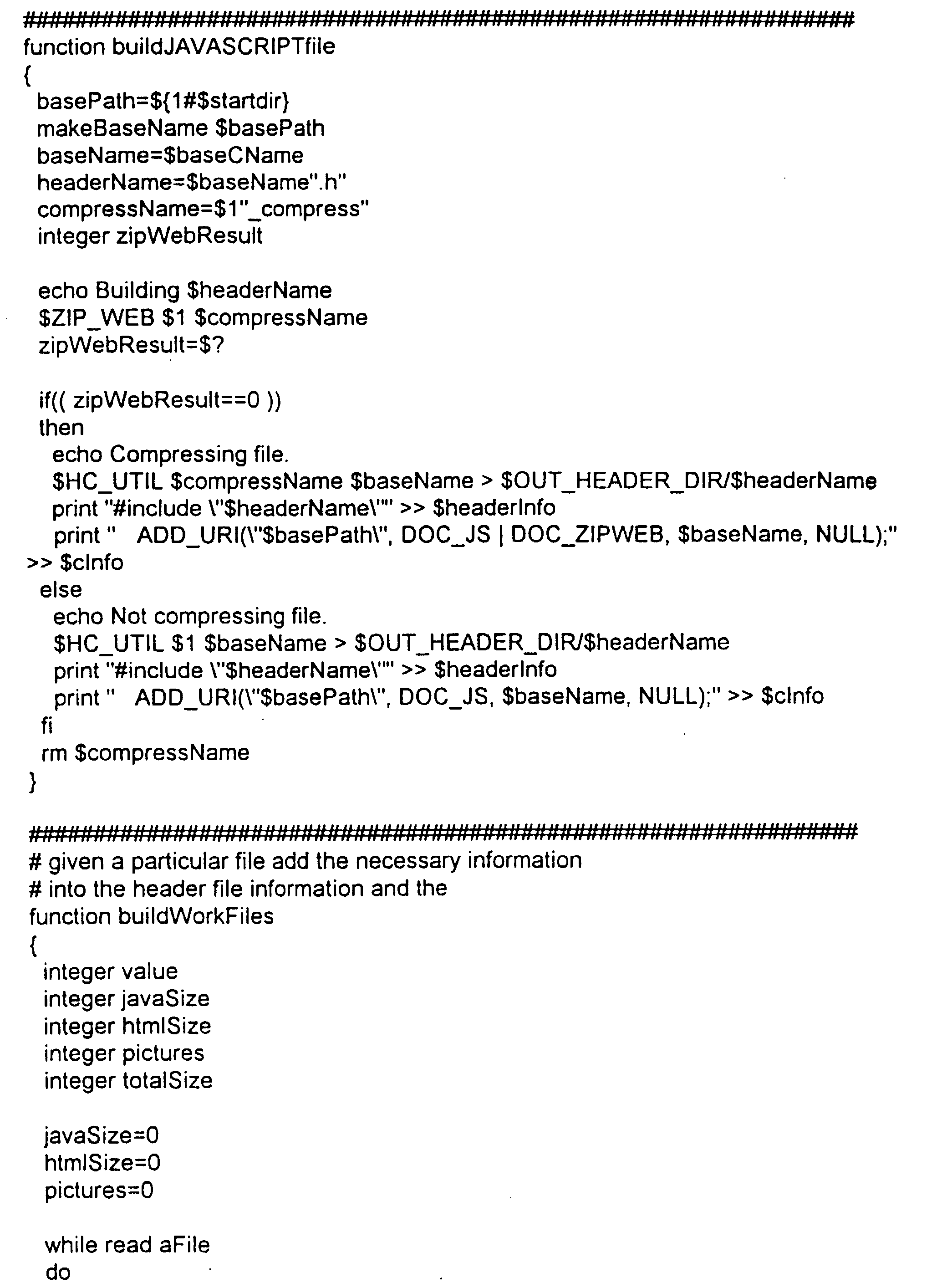

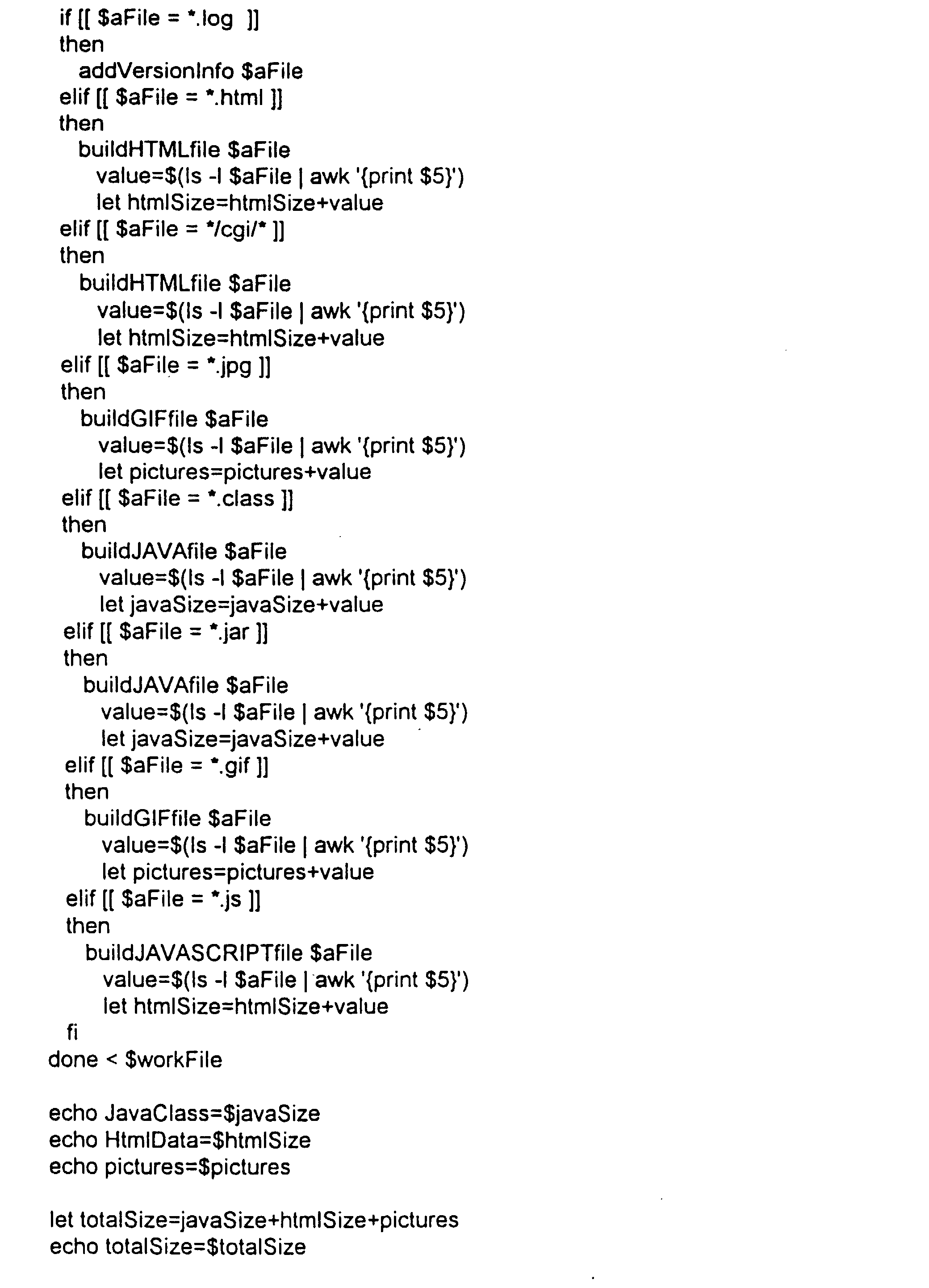

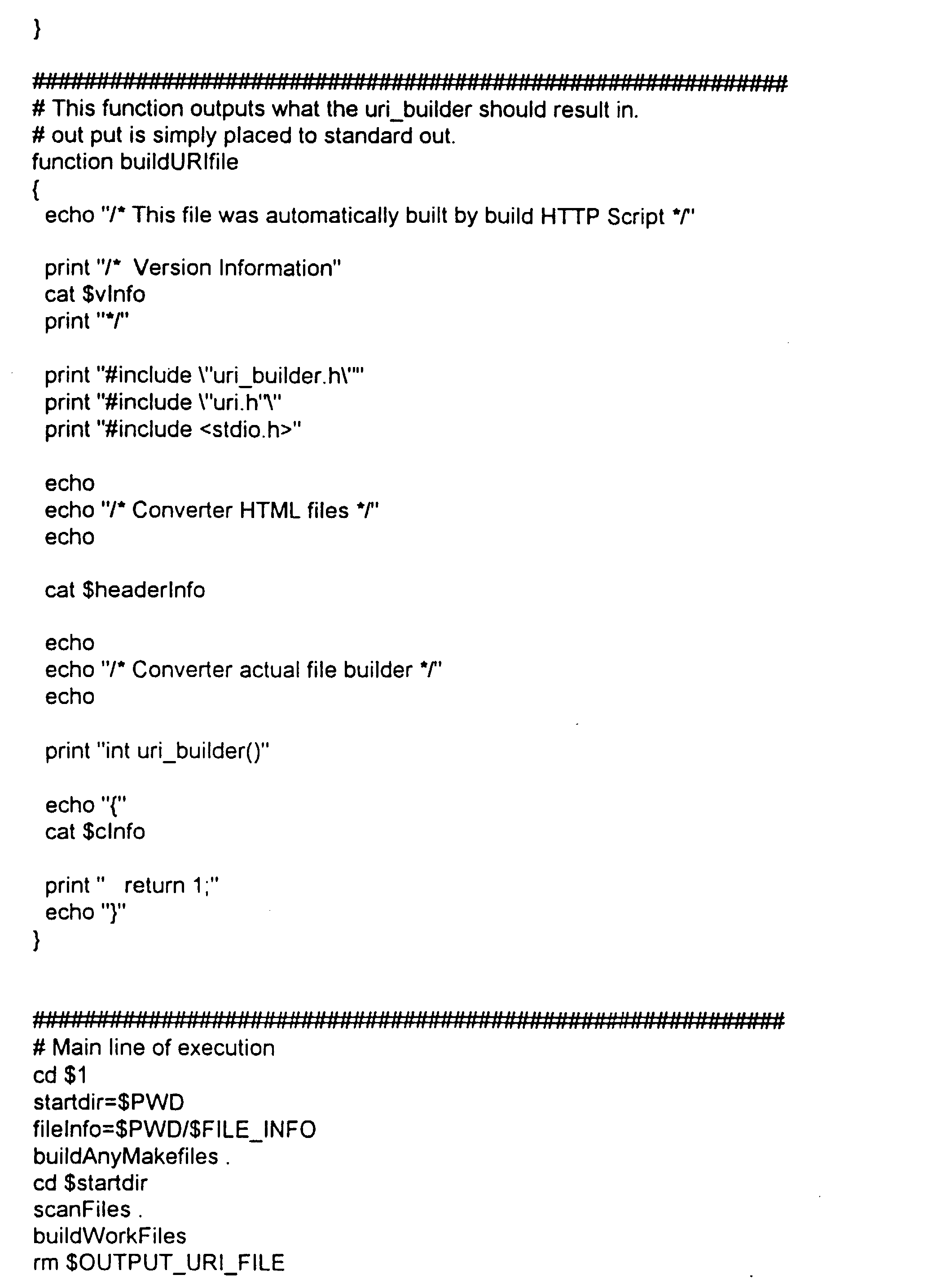

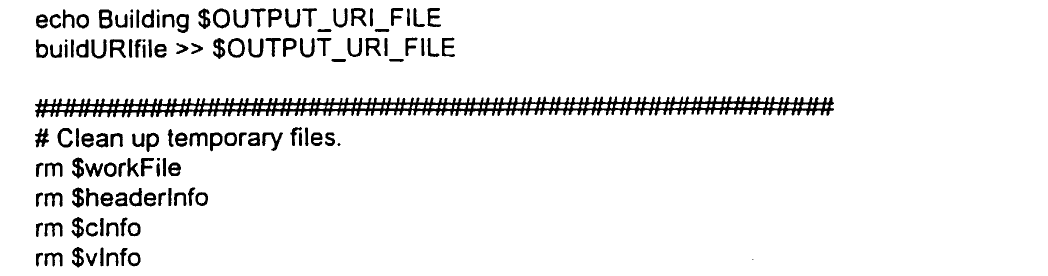

Among other functions, the above exemplary script invokes an executable program to convert the binary content of an identified portion of Web content into a header file compatible with the computer source code language of the Web client and server processes. In general, such a conversion function accepts the Web content binary data and converts the binary data into textual encoded data (e.g., hexadecimal) as an initialized data array (e.g., a byte array) in the computer source code language of the embedded Web client and server processes. The "hc" program (referred to by the script variable "HC_UTIL" above) preferably performs this function of converting HTTP data to the desired computer source language in the preferred embodiment. The following program listing provides an exemplary embodiment of the "hc" program. Those skilled in the art will readily recognize several equivalent techniques and programming structures and methods to provide the features of the "hc" program. The source code listing below is therefore intended only as exemplary of one possible embodiment of such a conversion utility.

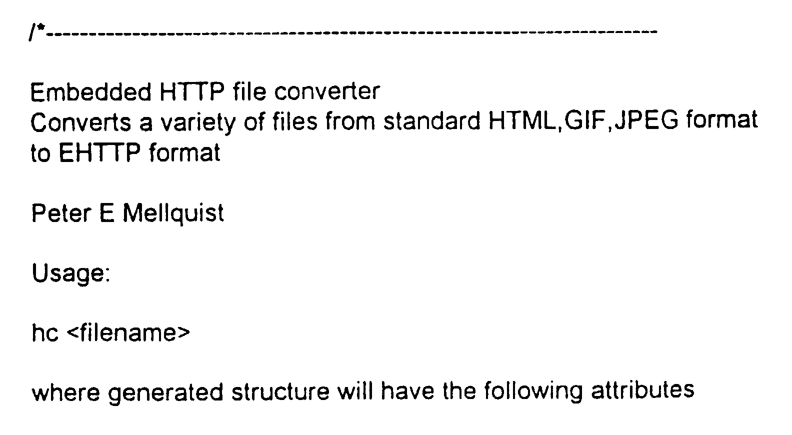

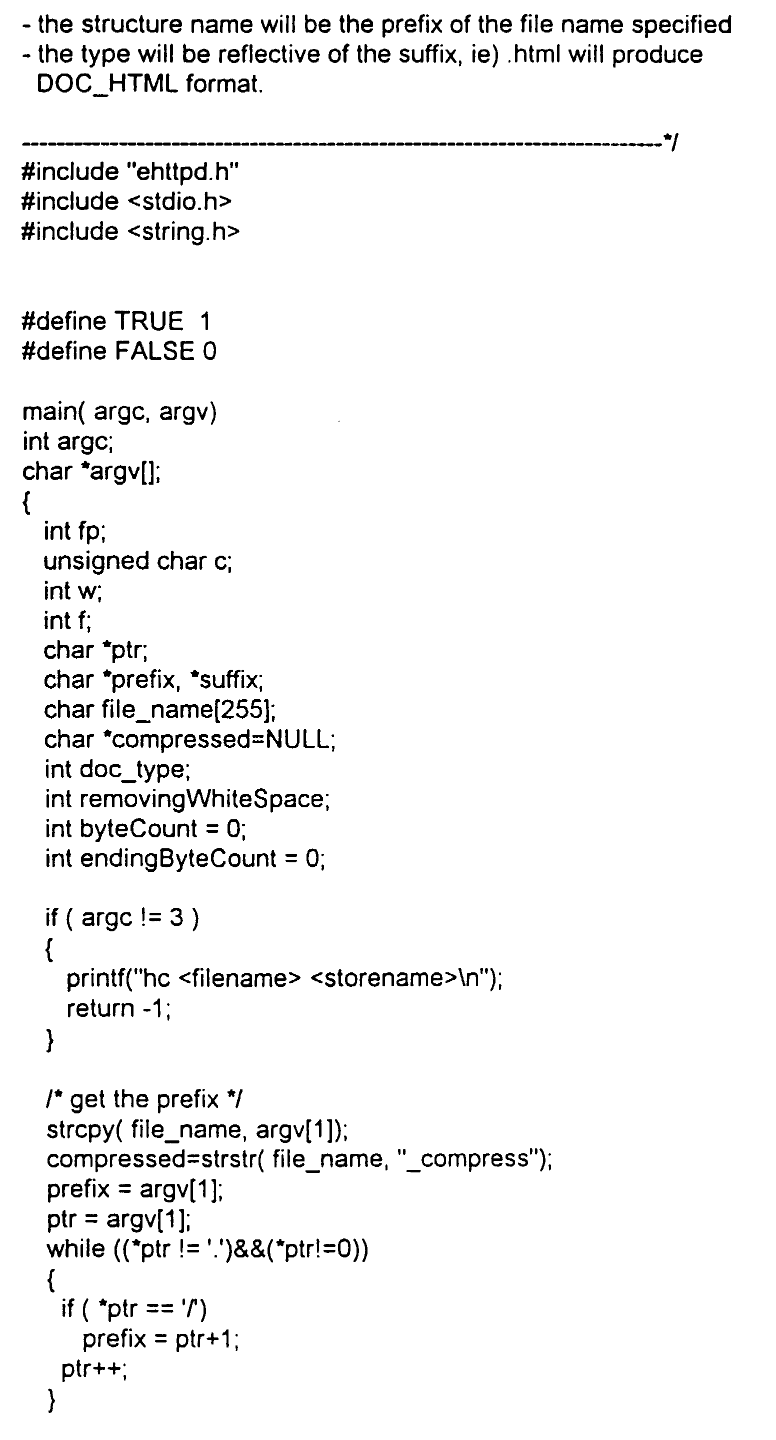

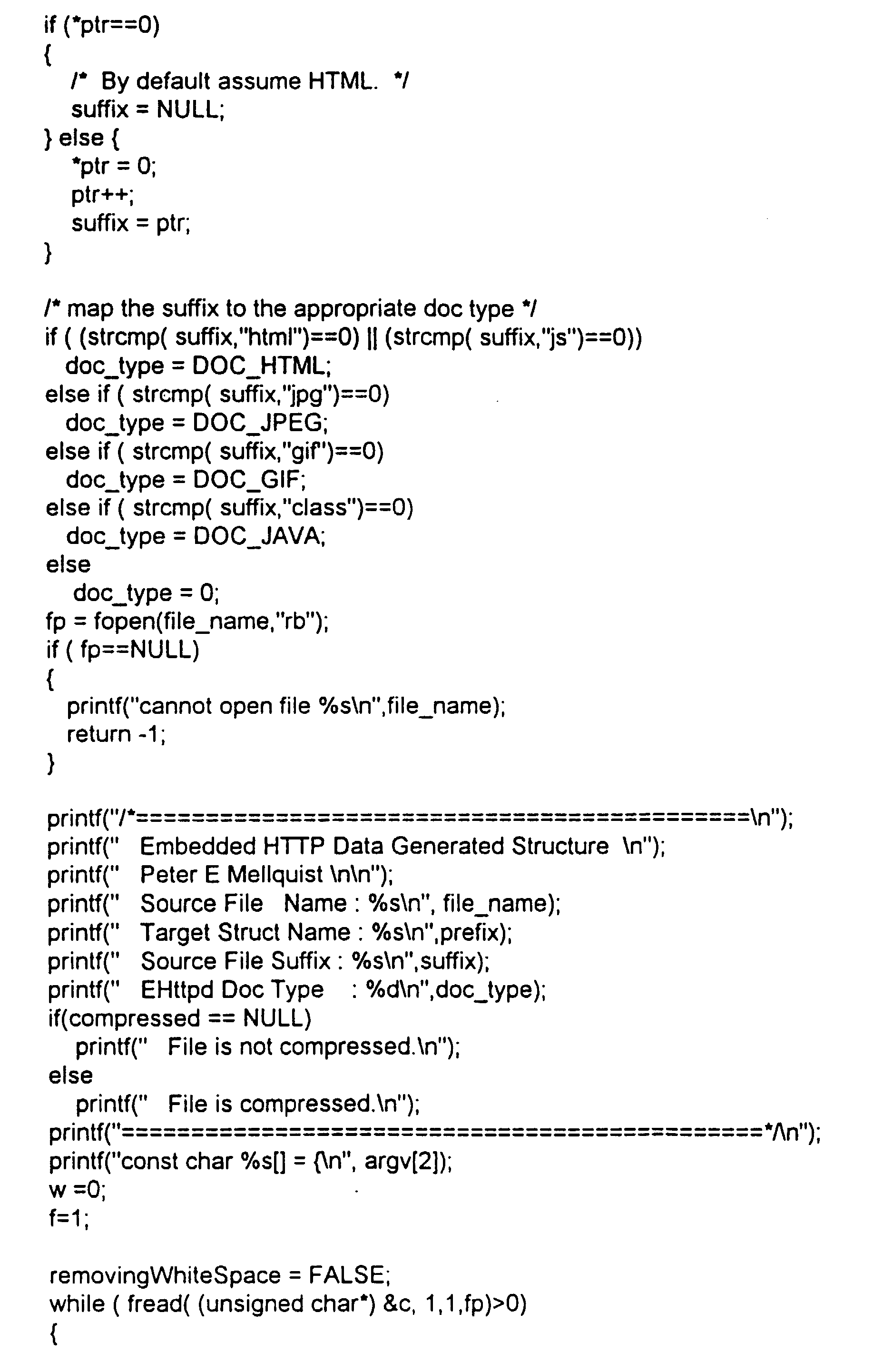

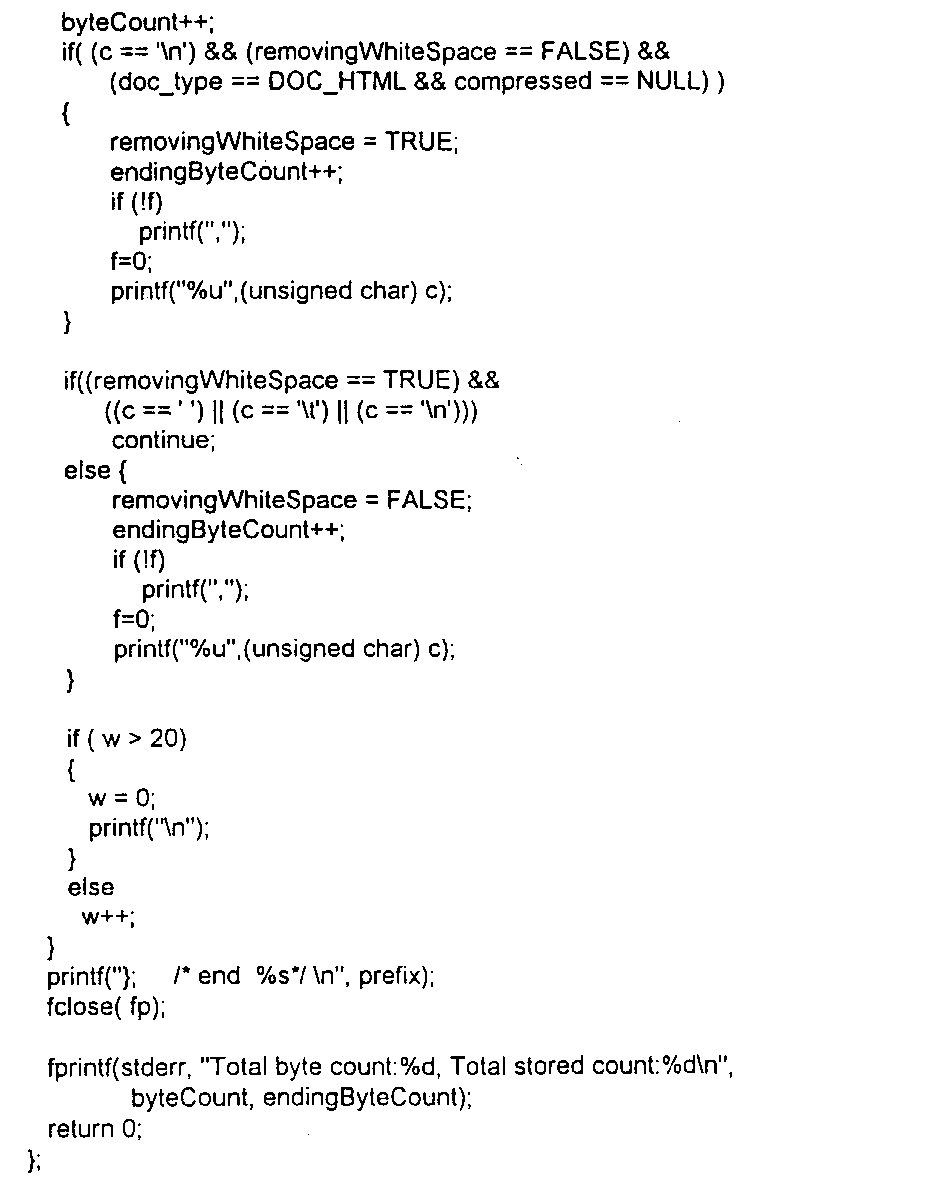

Other functions performed in the above exemplary WebAgent construction script are well known to those skilled in the art. For example, any of several well known compression programs may be employed or adapted for use to perform the compression function (referred to in the script by the "ZIPWEB" script variable). "Zip" techniques and programs are well known in the art and readily available in commerce. Zip programs are exemplary of one such compression technique which may be advantageously applied, Similar such utility functions are well known to those skilled in the art and readily available as commercial products. In the preferred embodiment a simple compression technique (as compared to well known Zip techniques) is utilized which provides adequate compression with fast decompression.

The disclosures in United States patent application no. 09/019,735, from which this application claims priority, and in the abstract accompanying this application are incorporated herein by reference.

## Claims

1. An embedded WebAgent including:
a first Web server process (304) for processing Web content requests (302);
compressed Web content linked to said first Web server process (304); and
a decompression module (412) coupled to said Web server such that said Web server retrieves said compressed Web content in response to receipt of a Web content request via said decompression module to decompress said compressed Web content.

2. A WebAgent as in claim 1, including a Web mini-client (306) process linked with said first Web server process.

3. A WebAgent as in claim 2, wherein said first server process (304) is operable to invoke (309) said Web mini-client process (306) to transfer said Web content request to a second Web server process (312).

4. A WebAgent as in claim 3 wherein said second Web server process (312) is within another embedded WebAgent (310).

5. A WebAgent as in claim 2, 3 or 4, wherein said Web server process and said Web mini-client process and said compressed Web content are linked at generation thereof (500..520).

6. A method of constructing a WebAgent including the steps of:
providing a Web server process in a computer source code language (504);
providing Web content (500..502) ;
converting said Web content to a format compatible with said computer source code language (508..520); and
compiling said Web server process and said Web content to generate a WebAgent (506).

7. A method as in claim 6, including the step of providing a Web mini-client process in a computer source code language (504), and wherein the step of compiling includes the step of compiling said Web mini-client process (506).

8. A method as in claim 6 or 7, including the step of:
compressing said Web content to generate a compressed Web content (512), wherein the step of compiling said Web content includes the step of compiling said compressed Web content (506).

9. A method as in claim 6, 7 or 8, wherein the converting step includes the step of:
converting said compressed Web content to a text encoded representation of said compressed Web content compatible with said computer source code language (516, 518).

10. A method as in any one of claims 6 to 9, including the step of:
generating meta-data structures associated with said Web content in said WebAgent correlating said Web content with a URL (520).
